# EUROPEAN PATENT APPLICATION

(11) **EP 3 351 382 A2**
(43) Date of publication of application: **25.07.2018**
(21) Application number: 18152661.7
(22) Date of filing: 20.01.2018
(51) Int. Cl.: B32B 37/00, B32B 37/04, B32B 25/10, D06N 7/00

(54) **METHOD AND DEVICE FOR FORMING A SLIP-RESISTANT TEXTILE PRODUCT**

(30) Priority: 20.01.2017 NL 2018199
(71) Applicant: Turion Holding B.V., 7574 PG Oldenzaal (NL)
(72) Inventor: SMITH, Menze Ite, 7574 PG Oldenzaal (NL)
(74) Representative: Bartelds, Erik

(57) **Abstract**

The invention describes a method for forming a slip-resistant textile product, comprising of supplying a cloth, supplying an anti-slip material, arranging a layer of the anti-slip material on the cloth on at least one side, and fixing the layer of anti-slip material on the cloth by heating.

The invention further comprises a slip-resistant textile product, comprising a cloth coated on at least one side with a layer of anti-slip material which is fixed on the cloth by heating.

The invention also describes a device for forming a slip-resistant textile product, comprising cloth supply means for supplying a cloth, anti-slip supply means for supplying an anti-slip material, applicator means for arranging a layer of the anti-slip material on the cloth on at least one side, and fixing means for fixing the layer of anti-slip material on the cloth by heating.

## Description

The invention relates to a method for forming a slip-resistant textile product.

Textile products, such as cloths, are often used for decorating for instance shop windows, shop interiors, in hotels, at events and at many other locations. In many situations it is however undesirable for such cloths to start sliding or shifting over the usually smooth base surface. In that case, an anti-slip mat or a layer of anti-slip material is often placed on the base surface first, after which the decorative textile product is then placed on this anti-slip material. This manner of fixing textile is not used exclusively in decoration, but also in other situations where sliding or shifting of lying material is undesirable or may be dangerous. It is possible here to envisage tablecloths, placemats, but also bedcovers, surgical drapes and the like.

The conventional manner of fixing decorative and other textile products entails a number of drawbacks. The use of separate anti-slip mats or anti-slip material thus results in additional costs, while the additional operations also require more time. In addition, anti-slip materials are not always available in the same sizes as the decorative textile products, so that it is for instance necessary to place a number of mats adjacently of each other in order to cover a determined surface.

In addition, anti-slip materials do not always provide sufficient friction to hold the textile products draped thereover in place. Because of this there is still a risk of shifting or sliding, which in spaces such as for instance a shop may result in dangerous situations for staff or shoppers.

It would be possible to use textile products without underlying anti-slip material if the textile product could be fastened directly to the base surface. This is however often not possible, for instance in the case of a hard base surface. In addition, the best-known fastening means result in damage to the material and/or the base surface and, in the case of larger surface areas, the central portion can still move or slip.

The invention therefore has for its object to provide a method with which a textile product can be made slip-resistant. According to the invention, such a method comprises of:
supplying a cloth,
supplying an anti-slip material,
arranging a layer of the anti-slip material on the cloth on at least one side, and
fixing the layer of anti-slip material on the cloth by heating.

By fixing the anti-slip material on the cloth a decorative textile product is obtained which is per se slip-resistant, and can thus be placed on a base surface without interposing of separate anti-slip mats. "Cloth" can here be understood to mean a relatively thin and supple fabric or non-woven material which is easily pliable.

The anti-slip material can be chosen from the group consisting of thermoplastic EVAs, thermoplastic polyurethane-based elastomers (TPU), thermoplastic polyolefin-based elastomers (TPO) and thermoplastic polylactic acid polymers (PLA). These are all materials which have a high degree of roughness but are sufficiently flexible to be combined with cloth.

The anti-slip material can be supplied in the form of a film. Films are relatively easy to handle and arrange on a cloth.

On the other hand, it is also possible to envisage that the anti-slip material is supplied in liquid form. The cloth is then as it were printed with anti-slip material.

The anti-slip material can be arranged over substantially the whole surface area of the cloth, but can also be arranged on the cloth in a pattern, depending on the requirements imposed on the slip-resistance and the manner in which the anti-slip material is supplied. A film will more likely be arranged over the whole surface area, while a pattern can be formed in simple manner with a liquid anti-slip material.

In order to be able to arrange the anti-slip material on the cloth in simple manner, it is recommended for the layer to be arranged while the cloth is being transported. A large surface area of the cloth can thus be coated with anti-slip material relatively quickly. The cloth can here be transported at a speed lying between 0.8 m/min and 14 m/min while the anti-slip material is being arranged.

The layer of anti-slip material can be arranged on the cloth by means of at least one roller or drum. The drum can optionally be provided with a pattern in order to consciously arrange the layer of anti-slip material more thickly or thinly locally, or even in individual dots.

The cloth can here be supported during arranging of the layer of anti-slip material. All this can be achieved in simple manner when the cloth and the anti-slip material are guided between the at least one roller or drum and a conveyor belt. Sufficient pressure can thus on the one hand be exerted on the cloth and the anti-slip material to join them firmly together, while the two products also remain properly supported.

The layer of anti-slip material can be fixed on the cloth by heating it to a temperature lying between 80°C and 210°C, preferably between 100°C and 180°C, more preferably between 120°C and 150°C. A good fixation is obtained within these temperature ranges.

In order to fix the anti-slip material firmly on the cloth pressure can be exerted thereon, preferably a pressure of a maximum of 6 bar, more preferably a pressure lying between 2 bar and 4 bar.

In order to be able to use the slip-resistant textile product safely in spaces which are open to the public, it can be advantageous for the method to further comprise a step of making the slip-resistant textile product fire-resistant.

The slip-resistant textile product can for this purpose be impregnated or sprayed with a fire-resistant material. The fire-resistant material can for instance comprise an organophosphorus compound, particularly a water or alcohol-based phosphate or phosphonate. This phosphorus compound can also comprise halogens.

A simple manner of impregnating or spraying is achieved when the slip-resistant textile product is carried through a bath with the fire-resistant material or along a spray installation for the fire-resistant material. In the bath or during the spraying, the fire-resistant material can here have a temperature lying between 90°C and 140°C, preferably between 100°C and 120°C. At these temperatures the fire-resistant material is sufficiently liquid to properly penetrate into and adhere to the cloth and/or the layer of anti-slip material.

The slip-resistant textile product can here be carried through the bath with fire-resistant material at a speed lying between 6 m/min and 50 m/min. The optimal speed depends on the temperature of the bath; the higher this temperature, the faster the textile product can be carried through the bath. The same relation otherwise also exists between the speed at which the cloth is transported during arranging of the layer of anti-slip material and the temperature at which the anti-slip material is fixed on the cloth. It is here also the case that a higher temperature is needed at a higher transport speed in order to nevertheless apply sufficient heat energy within the relatively short residence time.

For many applications, both decorative and otherwise, it may be desirable for the textile product to have a sleek appearance. The method can for this purpose comprise a step of making the slip-resistant textile product crease-resistant. This can for instance be achieved by impregnating the slip-resistant textile product with melamine.

The invention also relates to a slip-resistant textile product which is obtained by applying the above described method. According to the invention, such a slip-resistant textile product comprises a cloth coated on at least one side with a layer of anti-slip material which is fixed on the cloth by heating. As already indicated above, such a slip-resistant textile product has the advantage that use need not be made of separate anti-slip materials.

The anti-slip material can comprise a film, or a layer arranged in liquid form and cured.

The cloth can have a specific weight lying between 45 g/m² and 850 g/m². The invention can thus be applied in very diverse weight qualities of cloth.

The cloth can be woven, knitted or crocheted, or can be a non-woven. The invention can thus be applied in many different types of cloth.

The cloth can further be manufactured from a plastic or from a natural fibre material. The material can for instance be chosen from the group consisting of polyester, particularly trevira, cotton, viscose, elastomer, particularly spandex, or a combination thereof.

The layer of anti-slip material can have a specific weight of between 0.5 g/m² and 70 g/m². The specific weight of the layer of anti-slip material is normally chosen in relation to the specific weight of the cloth. In order to fix a relatively thin cloth it is possible to suffice with a thinner layer of anti-slip material than is needed to fix a relatively heavyweight cloth.

Further preferred embodiments of the slip-resistant textile product are described in the dependent clauses 23, 26, 27 and 33-35.

Finally, the invention relates to a device for forming a slip-resistant textile product. According to the invention, such a device comprises:
cloth supply means for supplying a cloth,
anti-slip supply means for supplying an anti-slip material,
applicator means for arranging a layer of the anti-slip material on the cloth on at least one side, and
fixing means for fixing the layer of anti-slip material on the cloth by heating.

According to a first embodiment of the invention, the anti-slip supply means comprise at least one supply roll onto which an anti-slip film is wound. In another embodiment the anti-slip supply means comprise at least one supply container filled with liquid anti-slip material and a transfer roller rotatable therealong.

The applicator means can be configured to exert pressure on the cloth and/or the anti-slip material. The applicator means can for this purpose comprise at least one roller or drum and a conveyor belt guided therealong. The cloth and the anti-slip material can be clamped and pressed together between this roller or drum and the conveyor belt.

The fixing means can be integrated with the applicator means. The fixing means can in particular comprise at least one heating element co-acting with the roller or drum. The layer of anti-slip material can thus be fixed on the cloth immediately while being pressed together with the cloth.

The invention is now elucidated on the basis of a number of examples, wherein reference is made to the accompanying drawing, in which:
Figure 1 is a schematic perspective view of a textile product according to the invention in use as decoration, for instance in a shop window,
Figure 2 is a schematic perspective view of another use of the textile product according to the invention,
Figures 3A and 3B show cross-sectional views through different variants of the textile product of Figure 1 or Figure 2,
Figure 4 is a perspective view of a part of a device for forming a slip-resistant textile product,
Figure 5 is a view corresponding with Figure 4 of an alternative embodiment of the device,
Figure 6 is a schematic cross-sectional view of yet another embodiment of the device for heating the slip-resistant textile product,
Figure 7 shows a variant of the device of Figure 6 which is suitable for use with an anti-slip film,
Figure 8 is a cross-section through another embodiment of the device according to the invention, and
Figure 9 is a flow diagram showing the most important steps of the method according to the invention.

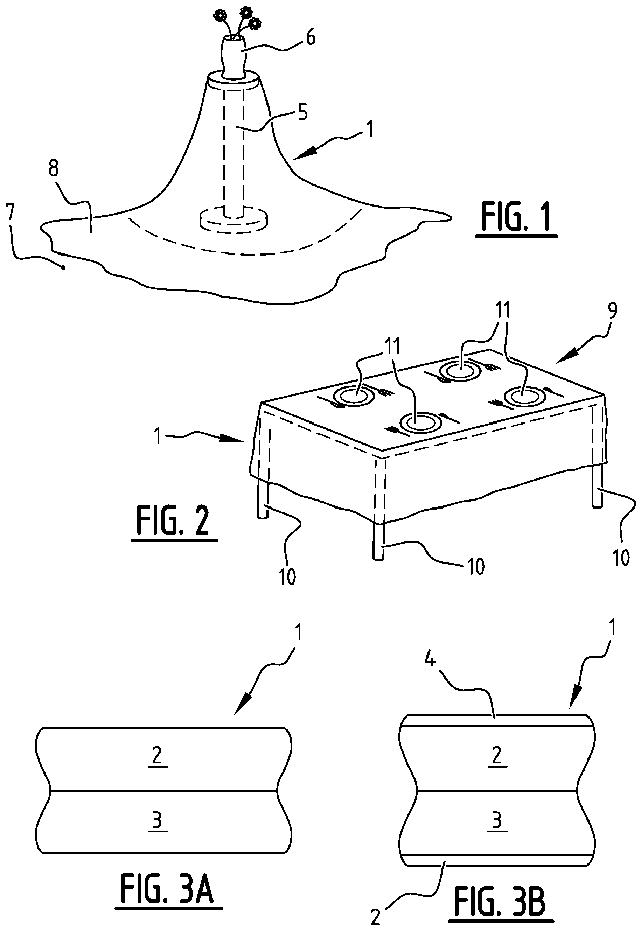

A slip-resistant textile product 1 according to the invention comprises a cloth 2 and a layer of anti-slip material 3 arranged thereon (Fig. 3A). Cloth 2 forms the visible side, while the layer of anti-slip material 3, which provides for roughness, is situated on the side which is concealed from view. Cloth 2 can be a fabric, a knit, crochet work or a non-woven. It can be manufactured from natural material or from synthetic fibres. Suitable materials are for instance polyester, particularly trevira, cotton, viscose, elastomer, particularly spandex, or a combination of these materials. The thickness and quality of cloth 2 can vary, and the cloth can have a specific weight in the order of 45-850 g/m².

The layer of anti-slip material 3 can be arranged over the whole surface area of cloth 2 or over only a part thereof. Anti-slip material 3 can for instance be arranged in strips or in a different pattern. The anti-slip material can be chosen from the group consisting of thermoplastic EVAs, thermoplastic polyurethane-based elastomers (TPU), thermoplastic polyolefin-based elastomers (TPO) and thermoplastic polylactic acid polymers (PLA). The thickness of the layer of anti-slip material 3 is associated with the thickness of cloth 2. For most applications, the anti-slip material can have a specific weight of 0.5-70 g/m².

Although in the shown example a layer of anti-slip material 3 is arranged only on the underside of cloth 2, it is also possible to envisage cloth 2 being coated with anti-slip material 3 on both sides.

When textile product 1 has to be used in conditions where fire resistance is important, for instance in public spaces such as shops, restaurants, hotels or at events, it can be impregnated with a fire-resistant material. Organophosphorus compounds, such as a phosphate or phosphonate, are suitable as fire-resistant material. In order to impregnate textile product 1 it can be carried through a bath filled with the fire-resistant material in liquid form. The fire-resistant material can for this purpose be brought to a temperature lying between 90°C and 140°C, preferably between 100°C and 120°C. In the shown example the fire-resistant material then forms a protective layer 4 on both sides of textile product 1 after cooling (Fig. 3B) and/or the fire-resistant material has then been absorbed into cloth 2 and anti-slip material 3.

Textile product 1 is suitable for use as decoration, for instance as a decorative base or backdrop in a shop window (Fig. 1). Decorative textile product 1 can for instance be draped over a stand 5 on which an object 6, in this case a flower vase, is placed. Textile product 1 can be arranged with its rough, slip-resistant side directly on a base surface, without additional layers first having to be placed thereunder. The parts 8 of the slip-resistant textile product which come into direct contact with base surface 7, in the shown example particularly the peripheral edge of textile product 1, provide sufficient resistance to shifting of textile product 1. This is also the case when someone stands on or walks over textile product 1; there is no risk of textile product 1 shifting or sliding over base surface 7, which could cause someone to fall. Because textile product 1 is in the shown example provided over its whole surface area with a layer of anti-slip material 3, it can be used in any situation; every point of the slip-resistant side is equally rough, and it is even possible to lay the cloth completely flat on a floor or other base surface without the cloth slipping.

When textile product 1 is used decoratively, this will usually be in a public space or semi-public environment. It will there usually be important for textile product 1 to take not only a slip-resistant but also a fire-resistant, or at least flame-retardant, form. The textile product with the structure as seen in figure 3B and/or the textile product wherein the fire-resistant material is absorbed into gaps or even molecules of cloth 2 and/or anti-slip material 3 (fully impregnated) will thus often be opted for in these uses.

The slip-resistant textile product 1 can also be used in a different environment, for instance as tablecloth and/or placemat (Fig. 2). In the shown example textile product 1 is draped over a table 9, of which only legs 10 are still visible. In this example it is precisely the central part 8 of textile product 1 which is in contact with the base surface, which is here formed by the top of table 9. Crockery 11 is placed on the textile product 1 functioning as tablecloth. Although not strictly necessary, in this embodiment textile product 1 could be provided with a slip-resistant layer on both sides, which also prevents the risk of crockery 11 shifting over the tablecloth.

For use of textile product 1 as tablecloth or in other, more formal applications, it can be desirable for textile product 1 to be crease-resistant or crease-proof. Textile product 1 can for this purpose be impregnated with melamine.

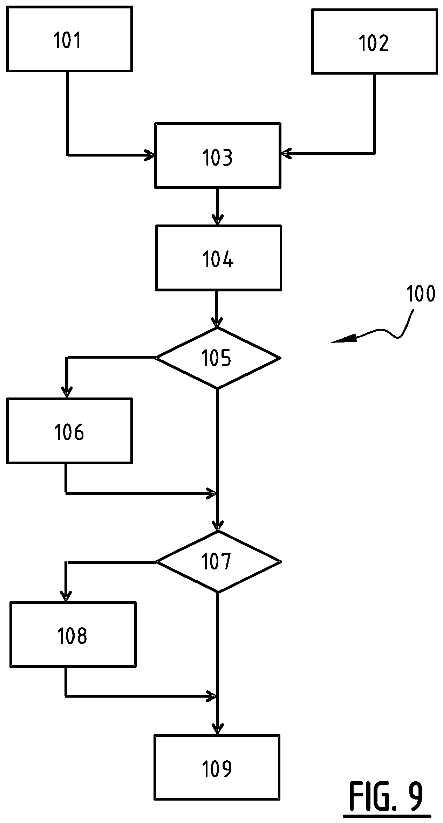

The slip-resistant textile product 1 is for instance formed by a method 100 (Fig. 9) wherein a cloth 2 is in the first instance supplied (with step 101) and an anti-slip material 3 is in addition supplied (step 102). A layer of the anti-slip material 3 is then arranged on cloth 2, in any case on one side thereof, and if necessary on both sides thereof (step 103). The layer of anti-slip material 3 is fixated on cloth 2 by heating (step 104). These steps are elucidated in more detail below.

It is then determined whether textile product 1 needs to be fire-resistant (step 105). If this is indeed the case, the product is made fire-resistant in step 106 by impregnating it with a suitable fire-resistant material 4. As already stated above, suitable materials are organophosphorus compounds such as phosphates and phosphonates. In this step textile product 1 can thus be carried through a bath with the fire-resistant material at a speed of 6-50 m/min. The temperature of the fire-resistant material in the bath can be 90-140°C, preferably 100-120°C. The optimal transport speed and optimal temperature are associated with each other: the higher the temperature of fire-resistant material 4, the faster textile product 1 can be carried through the bath.

If textile product 1 need not be fire-resistant, this step is skipped and it is then determined whether it is important for the intended application of textile product 1 that it is crease-resistant (step 107). If this is indeed the case, textile product 1 is made crease-resistant (step 108), for instance by impregnating it with melamine.

If crease resistance is not a requirement, textile product 1 is finished and can be carried away for further use in step 109. Otherwise, textile product 1 can be carried away after being impregnated with melamine.

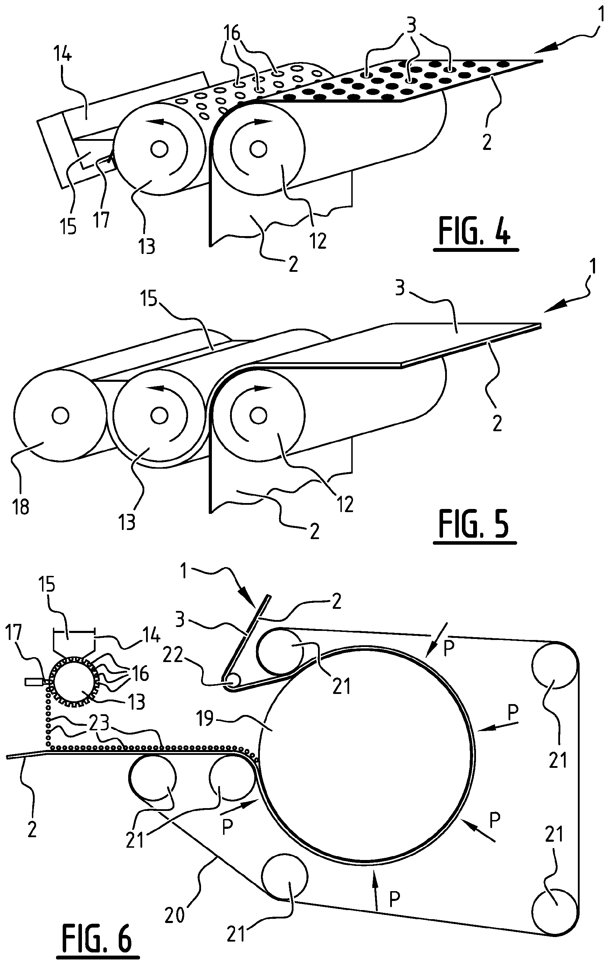

Figure 4 shows schematically a part of the installation with which steps 101-103 of method 100 can be performed. Cloth 2 is supplied between two rollers 12, 13 rotating in opposite directions. Roller 12 is here a conveyor roller and roller 13 a transfer roller. This transfer roller 13 rotates along a container 14 filled with liquid anti-slip material 15, and thus entrains this anti-slip material. Transfer roller 13 is provided with a pattern of recesses 16 which are recessed relative to the outer surface of the roller. Roller 13 continues along a wiping member 17 which wipes excess anti-slip material 15 from the surface of roller 13, whereby anti-slip material remains only in recesses 16. This anti-slip material is then transferred onto cloth 2 in the pattern determined by transfer roller 13.

In an alternative embodiment the liquid anti-slip material 15 is arranged as a layer with constant thickness over the whole surface area of cloth 2 (Fig. 5). Transfer roller 13 has herein a smooth surface, whereby the anti-slip material is distributed over the whole width of this roller 13 and is thus arranged over the whole width of cloth 2. Anti-slip material 15 is in this example supplied in a space defined between transfer roller 13 and an auxiliary roller 18.

Another way of arranging the anti-slip material on cloth 2 in a pattern and fixing it thereon is shown in figure 6. In this figure, which in fact shows the steps 101-104 of method 100, there is once again a container 14 filled with liquid anti-slip material 15, along which a roller 13 with recesses 16 rotates. A wiping member 17 once again ensures that anti-slip material remains only in recesses 16. This anti-slip material falls onto cloth 2 in the form of individual droplets or granules 23 and is thus carried toward a heated drum 19, which is coated with teflon or another non-adhesive material. Cloth 2 is here transported by an endless belt 20 running along a number of reversing rollers 21. This belt 20 is for instance manufactured from nomex and coated with silicone. Along the path where cloth 2 and the droplets of anti-slip material 23 are enclosed between belt 20 and drum 19 a great pressure is exerted thereon, as designated schematically with arrows P. Droplets 23 of the anti-slip material are fixed on cloth 2 by this pressure in combination with the heating by drum 19. After exiting the gap between belt 20 and drum 19, the finished product is carried away via an end roller 22.

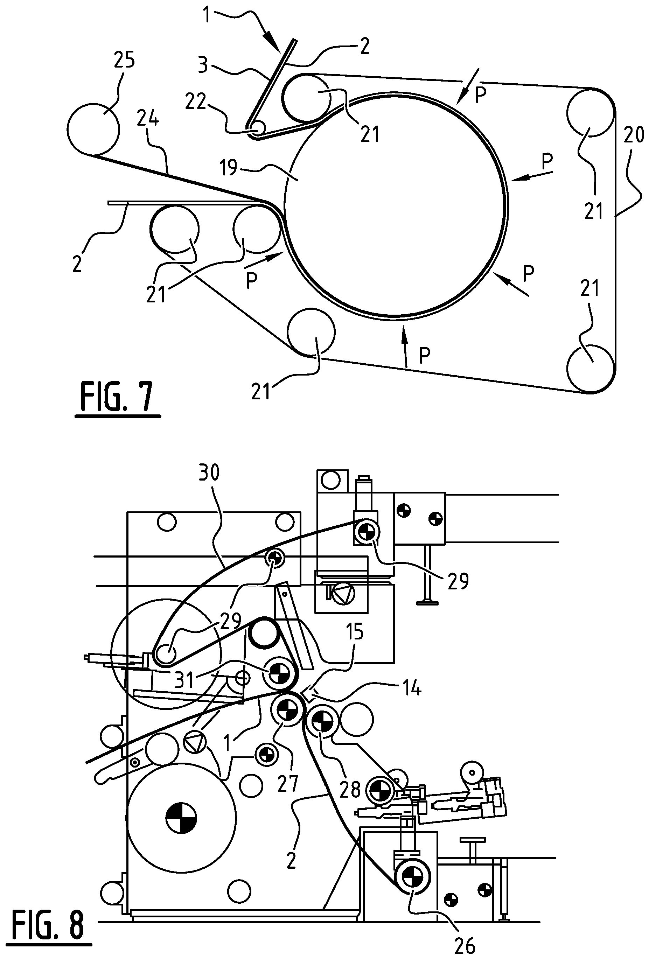

In all variants shown up to this point there has been an anti-slip material which is supplied in liquid form. It is however also possible to envisage supplying the anti-slip material in the form of a film 24 (Fig. 7). The anti-slip film 24 is in that case supplied on a roll 25 which is unwound in the vicinity of the supplied cloth 2. Cloth 2 and film 24 are together pulled into the pinch between endless belt 20 and heated drum 19. Anti-slip film 24 is there fixed on cloth 2, whereby, upon exiting, the slip-resistant textile product 1 is once again obtained, consisting of the cloth 2 and the layer 3 of anti-slip material. The installation which is used further corresponds to that of figure 6.

In all variants shown in Fig. 4-7 cloth 2 is transported at a speed of 0.8-14 m/min during arranging of the anti-slip material. In order to fix the anti-slip material on the cloth it is in the shown examples heated to a temperature of 80-210°C, preferably 100-180°C and more preferably 120-150°C. The pressure P which is exerted by drum 19 and belt 20 amounts here to a maximum of 6 bar, and more preferably 2-4 bar.

Figure 8 shows how a slip-resistant textile product 1 is covered with a protective layer of safety paper 30 immediately after the layer of anti-slip material 3 is arranged on cloth 2. This prevents the anti-slip material 3 from adhering to the visible side of cloth 2 when the slip-resistant textile product 1 is wound onto a roll. This figure shows how cloth 2 is supplied via a roller 26 and is then guided between two rollers 27, 28 running in opposite directions and directly along container 14 with the liquid anti-slip material 15. A strip of protective paper 30 is simultaneously supplied via a number of guide rollers 29. Protective paper 30 and slip-resistant textile product 1 are guided between roller 27 and a roller 31, where they are pressed together. The layer of anti-slip material 2 is thus enclosed between cloth 2 on the one side and protective paper 30 on the other side, whereby textile product 1 can be wound safely onto a roll without the risk of contamination of or damage to the visible side of cloth 2 by undesired contact with anti-slip material 3.

The invention thus provides in relatively simple manner a textile product which is slip-resistant and can thus be used in many applications without having to resort to separate slip-resistant mats or pads.

Particular features and properties of the invention are summarized below in clauses:
Clause 1. Method for forming a slip-resistant textile product, comprising of:
   supplying a cloth,
   supplying an anti-slip material,
   arranging a layer of the anti-slip material on the cloth on at least one side, and
   fixing the layer of anti-slip material on the cloth by heating.
Clause 2. Method according to clause 1, characterized in that the anti-slip material is chosen from the group consisting of thermoplastic EVAs, thermoplastic polyurethane-based elastomers (TPU), thermoplastic polyolefin-based elastomers (TPO) and thermoplastic polylactic acid polymers (PLA).
Clause 3. Method according to clause 1 or 2, characterized in that the anti-slip material is supplied in the form of a film.
Clause 4. Method according to clause 1 or 2, characterized in that the anti-slip material is supplied in liquid form.
Clause 5. Method according to any of the foregoing clauses, characterized in that the anti-slip material is arranged over substantially the whole surface area of the cloth.
Clause 6. Method according to any of the clauses 1-4, characterized in that the anti-slip material is arranged on the cloth in a pattern.
Clause 7. Method according to any of the foregoing clauses, characterized in that the layer of anti-slip material is arranged while the cloth is being transported.
Clause 8. Method according to clause 7, characterized in that the cloth is transported at a speed lying between 0.8 m/min and 14 m/min while the anti-slip material is being arranged.
Clause 9. Method according to any of the foregoing clauses, characterized in that the layer of anti-slip material is arranged on the cloth by means of at least one roller or drum.
Clause 10. Method according to clause 9, characterized in that the cloth is supported during arranging of the layer of anti-slip material.
Clause 11. Method according to clause 10, characterized in that the cloth and the anti-slip material are guided between the at least one roller or drum and a conveyor belt.
Clause 12. Method according to any of the foregoing clauses, characterized in that the layer of anti-slip material is fixed on the cloth by heating it to a temperature lying between 80°C and 210°C, preferably between 100°C and 180°C, more preferably between 120°C and 150°C.
Clause 13. Method according to any of the foregoing clauses, characterized in that the layer of anti-slip material is fixed on the cloth by exerting pressure thereon, preferably a pressure of a maximum of 6 bar, more preferably a pressure lying between 2 bar and 4 bar.
Clause 14. Method according to any of the foregoing clauses, characterized by the step of making the slip-resistant textile product fire-resistant.
Clause 15. Method according to clause 14, characterized in that the slip-resistant textile product is impregnated with a fire-resistant material.
Clause 16. Method according to clause 15, characterized in that the fire-resistant material comprises an organophosphorus compound, particularly a phosphate or phosphonate.
Clause 17. Method according to clause 15 or 16, characterized in that the slip-resistant textile product is carried through a bath with the fire-resistant material or along a spray installation for the fire-resistant material.
Clause 18. Method according to clause 17, characterized in that the fire-resistant material has a temperature lying between 90°C and 140°C, preferably between 100°C and 120°C, in the bath or when exiting the spray installation.
Clause 19. Method according to clause 17 or 18, characterized in that the slip-resistant textile product is carried through the bath with the fire-resistant material or along a spray installation for the fire-resistant material at a speed lying between 6 m/min and 50 m/min.
Clause 20. Method according to any of the foregoing clauses, characterized by the step of making the slip-resistant textile product crease-resistant.
Clause 21. Method according to clause 20, characterized in that the slip-resistant textile product is impregnated with melamine.
Clause 22. Slip-resistant textile product, comprising a cloth coated on at least one side with a layer of anti-slip material which is fixed on the cloth by heating.
Clause 23. Slip-resistant textile product according to clause 22, characterized in that the anti-slip material is chosen from the group consisting of thermoplastic EVAs, thermoplastic polyurethane-based elastomers (TPU), thermoplastic polyolefin-based elastomers (TPO) and thermoplastic polylactic acid polymers (PLA).
Clause 24. Slip-resistant textile product according to clause 22 or 23, characterized in that the anti-slip material comprises a film.
Clause 25. Slip-resistant textile product according to clause 22 or 23, characterized in that the anti-slip material comprises a layer arranged in liquid form and cured.
Clause 26. Slip-resistant textile product according to any of the clauses 22-25, characterized in that the cloth is coated with the anti-slip material over substantially its whole surface area.
Clause 27. Slip-resistant textile product according to any of the clauses 22-25, characterized in that the anti-slip material is arranged on the cloth in a pattern.
Clause 28. Slip-resistant textile product according to any of the clauses 22-27, characterized in that the cloth has a specific weight lying between 45 g/m² and 850 g/m².
Clause 29. Slip-resistant textile product according to any of the clauses 22-28, characterized in that the cloth is woven, knitted or crocheted, or is a non-woven.
Clause 30. Slip-resistant textile product according to any of the clauses 22-29, characterized in that the cloth is manufactured from a plastic or from a natural fibre material.
Clause 31. Slip-resistant textile product according to clause 30, characterized in that the material is chosen from the group consisting of polyester, particularly trevira, cotton, viscose, elastomer, particularly spandex, or a combination thereof.
Clause 32. Slip-resistant textile product according to any of the clauses 22-31, characterized in that the layer of anti-slip material has a specific weight of between 0.5 g/m² and 70 g/m².
Clause 33. Slip-resistant textile product according to any of the clauses 22-32, characterized in that the cloth and/or the anti-slip material is impregnated with a fire-resistant material.
Clause 34. Slip-resistant textile product according to clause 33, characterized in that the fire-resistant material comprises an organophosphorus compound, particularly a water or alcohol-based phosphate or phosphonate.
Clause 35. Slip-resistant textile product according to any of the clauses 22-34, characterized in that the cloth and/or the anti-slip material is impregnated with melamine.
Clause 36. Device for forming a slip-resistant textile product, comprising:
   cloth supply means for supplying a cloth,
   anti-slip supply means for supplying an anti-slip material,
   applicator means for arranging a layer of the anti-slip material on the cloth on at least one side, and
   fixing means for fixing the layer of anti-slip material on the cloth by heating.
Clause 37. Device according to clause 36, characterized in that the anti-slip supply means comprise at least one supply roll onto which an anti-slip film is wound.
Clause 38. Device according to clause 36, characterized in that the anti-slip supply means comprise at least one supply container filled with liquid anti-slip material and a transfer roller rotatable therealong.
Clause 39. Device according to any of the clauses 36-38, characterized in that the applicator means are configured to exert pressure on the cloth and/or the anti-slip material.
Clause 40. Device according to clause 39, characterized in that the applicator means comprise at least one roller or drum and a conveyor belt guided therealong.
Clause 41. Device according to any of the clauses 36-40, characterized in that the fixing means are integrated with the applicator means.
Clause 42. Device according to clauses 40 and 41, characterized in that the fixing means comprise at least one heating element co-acting with the roller or drum.

Although the invention is described above on the basis of embodiments, it will be apparent that it can be varied in many ways. The scope of the invention is therefore defined solely by the following claims.

## Claims

1. Method for forming a slip-resistant textile product, comprising of:
supplying a cloth,
supplying an anti-slip material,
arranging a layer of the anti-slip material on the cloth on at least one side, and
fixing the layer of anti-slip material on the cloth by heating.

2. Method according to claim 1, **characterized in that** the anti-slip material is chosen from the group consisting of thermoplastic EVAs, thermoplastic polyurethane-based elastomers (TPU), thermoplastic polyolefin-based elastomers (TPO) and thermoplastic polylactic acid polymers (PLA).

3. Method according to claim 1 or 2, **characterized in that** the anti-slip material is supplied in the form of a film or in liquid form.

4. Method according to any of the foregoing claims, **characterized in that** the layer of anti-slip material is fixed on the cloth by:
heating it to a temperature lying between 80°C and 210°C, preferably between 100°C and 180°C, more preferably between 120°C and 150°C, and/or
by exerting pressure thereon, preferably a pressure of a maximum of 6 bar, more preferably a pressure lying between 2 bar and 4 bar.

5. Method according to any of the foregoing claims, **characterized by** the step of making the slip-resistant textile product fire-resistant, wherein the slip-resistant textile product is optionally impregnated with a fire-resistant material.

6. Method according to any of the foregoing claims, **characterized by** the step of making the slip-resistant textile product crease-resistant, wherein the slip-resistant textile product is optionally impregnated with melamine.

7. Slip-resistant textile product, comprising a cloth coated on at least one side with a layer of anti-slip material which is fixed on the cloth by heating.

8. Slip-resistant textile product according to claim 7, **characterized in that** the anti-slip material is chosen from the group consisting of thermoplastic EVAs, thermoplastic polyurethane-based elastomers (TPU), thermoplastic polyolefin-based elastomers (TPO) and thermoplastic polylactic acid polymers (PLA).

9. Slip-resistant textile product according to claim 7 or 8, **characterized in that** the anti-slip material comprises a film or a layer arranged in liquid form and cured.

10. Slip-resistant textile product according to any of the claims 7-9, **characterized in that** the cloth has a specific weight lying between 45 g/m² and 850 g/m².

11. Slip-resistant textile product according to any of the claims 7-10, **characterized in that** the cloth is woven, knitted or crocheted, or is a non-woven, wherein the cloth is optionally manufactured from a plastic or from a natural fibre material, particularly a material chosen from the group consisting of polyester, particularly trevira, cotton, viscose, elastomer, particularly spandex, or a combination thereof.

12. Slip-resistant textile product according to any of the claims 7-11, **characterized in that** the layer of anti-slip material has a specific weight of between 0.5 g/m² and 70 g/m².

13. Device for forming a slip-resistant textile product, comprising:
cloth supply means for supplying a cloth,
anti-slip supply means for supplying an anti-slip material,
applicator means for arranging a layer of the anti-slip material on the cloth on at least one side, and
fixing means for fixing the layer of anti-slip material on the cloth by heating.

14. Device according to claim 13, **characterized in that** the anti-slip supply means comprise:
at least one supply roll onto which an anti-slip film is wound, or
at least one supply container filled with liquid anti-slip material and a transfer roller rotatable therealong.

15. Device according to any of the claims 13-15, **characterized in that** the applicator means are configured to exert pressure on the cloth and/or the anti-slip material.
